# FASCICULE DE BREVET EUROPEEN

(11) **EP 2 098 742 B1**
(45) Date de publication et mention de la délivrance du brevet: **31.08.2011**
(21) Numéro de dépôt: 09154150.8
(22) Date de dépôt: 02.03.2009
(51) Int. Cl.: F16D 11/10, F16H 3/093, F16H 3/12

(54) **Boîte de vitesses à dérivation de couple par un rapport supérieur comprenant au moins deux arbres secondaires et procédés de changement de rapport montant et descendant associés**
Getriebe mit Kupplungsverzweigung durch ein höheres Übersetzungsverhältnis, das mindestens zwei Sekundärwellen umfasst, und Verfahren zur Veränderung des damit verbundenen aufsteigenden und absteigenden Übersetzungsverhältnisses
Gearbox with torque outlet by a higher gear comprising at least two secondary shafts and associated upward and downward shifting methods

(30) Priorité: 03.03.2008 FR 0851362
(43) Date de publication de la demande: 09.09.2009
(73) Titulaire: PEUGEOT CITROËN AUTOMOBILES S.A., 78140 Vélizy Villacoublay (FR)
(72) Inventeur: Mitchell, Clément, 92250, LA GARENNE COLOMBES (FR); Lelasseux, Xavier, 92150 SURESNES (FR)

(56) Documents cités:
- WO-A-2004/099654
- BE-A- 449 665
- BE-A- 494 796
- FR-A- 1 028 833
- FR-A- 1 232 175
- FR-A- 2 794 512
- JP-A- 2001 227 600
- US-A1- 2003 183 032

## Description

. L'invention concerne une boîte de vitesses à dérivation de couple par un rapport supérieur comprenant au moins deux arbres secondaires, ainsi que les procédés de changement de rapport montant et descendant associés. L'invention a notamment pour but d'améliorer le ressenti des changements de rapport de vitesses en évitant les ruptures de couple.

. L'invention trouve une application particulièrement avantageuse dans le domaine des boîtes de vitesses manuelles pilotées (BVMP) utilisées entre un dispositif de propulsion, tel qu'un moteur thermique ou une machine électrique, et un organe à entraîner, tel que des roues de véhicule automobile ou de moto.

. Les véhicules automobiles connus comportent une chaîne de traction formée par un dispositif de propulsion (comportant un moteur thermique et/ou une machine électrique), un embrayage, et une boîte de vitesses qui entraîne les roues. L'embrayage est relié d'une part au dispositif de propulsion et d'autre part à la boîte de vitesses, elle-même reliée aux roues du véhicule via une descente de pont.

. Plus précisément, la boîte de vitesses comporte un arbre primaire relié à l'embrayage et un arbre secondaire relié aux roues du véhicule, ces deux arbres étant reliés angulairement entre eux par l'intermédiaire d'engrenages formant les rapports de vitesse.

. Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer un changement de rapport.

. A cet effet, le manchon est lié en rotation à son arbre mais est mobile axialement pour permettre l'accrochage avec le pignon fou. On parle de crabotage lorsque le manchon entre en coopération avec un pignon fou de sorte qu'un rapport de vitesse est engagé, et de décrabotage lorsque le manchon se dégage du pignon fou de sorte que le rapport est désengagé.
Le document FR 2 794 512 represente l'état de la technique le plus proche. Ce document décrit une boîte de vitesses de type manuelle pilotée comportant:
un arbre primaire destiné à être relié à un moteur thermique (M), et au moins deux arbres secondaires (voir abrégé) destinés à être reliés aux roues (2, 3) du véhicule via une descente de pont, l'arbre primaire étant lié angulairement aux deux arbres secondaires via des engrenages formant les rapports de vitesse,
ces engrenages étant formés chacun par une roue solidaire en rotation de l'arbre primaire et par un pignon fou monté sur un des deux arbres secondaires qui engrènent entre eux, ou par une roue solidaire en rotation d'un des deux arbres secondaires et par un pignon fou monté sur l'arbre primaire qui engrènent entre eux,
des manchons de crabotage associables chacun à au moins un pignon fou, ces manchons de crabotage assurant les changements de rapport de vitesse,
un organe de frottement (23) associé à un rapport de vitesse (Rn), cet organe de frottement transmettant du couple de manière temporaire aux roues lors des changements de rapports via ce rapport de démultiplication.

. Une boîte de vitesses à crabots classiques, connue notamment du document FR-A-2 794 512, présente plusieurs inconvénients majeurs :
- des chocs générés par l'égalisation instantanée des vitesses de rotation (contrairement à un synchroniseur),
- un jeu de ré-attelage important (le jeu de ré-attelage est le jeu angulaire existant, rapport engagé, entre le pignon fou et le manchon) : ce jeu important est source d'inconfort lorsque le couple transmis change de signe passant de moteur menant à moteur mené, par exemple dans une situation de suivi de file sur autoroute, et
- une rupture de couple pendant le changement de rapport.

. L'invention se propose de résoudre d'une part le problème de rupture de couple lors du changement de rapport, et d'autre part le problème de choc généré par l'égalisation instantanée des vitesses de rotation.

. A cette fin, l'invention met en oeuvre, sur une boîte de vitesses à deux arbres secondaires, des crabots auto-éjectants, alors qu'un organe capable d'égaliser les vitesses de rotation des arbres par frottement est associé à un rapport de démultiplication intermédiaire ou au rapport final de démultiplication (la sixième sur une boîte de vitesses à six rapports) afin de pouvoir obtenir une réduction de la vitesse de l'arbre primaire sur tous les rapports. Cet organe de frottement est de préférence indépendant des manchons de crabotage.

. L'organe de frottement assure une dérivation de couple qui permet, en plus de transmettre du couple pendant le changement de rapport, de supprimer le choc inhérent à l'utilisation de crabots, source d'inconfort tout en conservant l'architecture conventionnelle.

. Ainsi, lors d'un passage d'un rapport N vers N+1, l'organe de frottement transmet progressivement du couple par glissement (on utilise le fait que l'arbre primaire lié au moteur évolue à une vitesse de rotation plus importante que celui du pignon moteur du rapport final) jusqu'à provoquer la chute du régime d'arbre primaire.

. Cette chute de régime permet au rapport N d'être automatiquement désengagé de manière mécanique par la définition géométrique spécifique des crabots auto-éjectants et d'engager le rapport N+1 alors que du couple est transmis par le rapport final. Dès que le rapport N+1 est engagé, l'organe de frottement est progressivement désactivé et le couple est intégralement transmis par le rapport N+1.

. Si des crabots classiques étaient utilisés avec l'organe de frottement, il serait très difficile de désengager le rapport N dès que la rupture du contact entre les faces tirage d'anti-lâcher est détectée. On rappelle que les faces tirage assurent la transmission du couple lorsqu'un couple positif est transmis du moteur vers les roues.

. En effet, le risque est de ne pas désengager suffisamment rapidement le rapport N et de provoquer un blocage cinématique de la boîte de vitesses par contact entre les faces rétro d'anti-lâcher. On rappelle que les faces rétro d'anti-lâcher assurent la transmission du couple lorsqu'un couple positif est transmis des roues vers le moteur.

. Le risque identifié est considérable puisque le jeu de ré-attelage est minimum, et ce d'autant plus lorsqu'on utilise des crabots bi-étages qui présentent un jeu angulaire réduit en rapport engagé.

. C'est pourquoi dans l'invention les crabots classiques sont remplacés par les crabots auto-éjectants qui permettent d'engager le rapport suivant N+1 alors que le rapport N est encore engagé. Cette technologie utilise le principe de l'éjection automatique des crabots N lorsque les crabots N+1 sont engagés, par apparition d'un différentiel négatif de régimes de rotation entre les crabots N et le pignon N dû à l'architecture même des boîtes conventionnelles.

. En résumé, l'invention présente les avantages suivants :
- l'organe de frottement associé au rapport supérieur permet de transmettre du couple pendant le changement de rapport, résolvant ainsi le principal inconvénient de la boîte de vitesses à synchroniseurs,
- tout en transmettant du couple, l'organe de frottement permet d'égaliser les vitesses de rotation de l'arbre et du pignon à craboter, éliminant le choc caractéristique d'une boîte de vitesses à crabots classique,
- en égalisant les vitesses de rotation avant crabotage, l'invention permet aussi de limiter au maximum les chocs des crabots auto-éjectants, et
- grâce à l'utilisation de profils auto-éjectants, l'invention permet d'éliminer le risque inhérent à l'association d'une boîte à crabots avec la dérivation de couple sur le rapport le plus élevé, à savoir le risque de blocage cinématique.

. En outre, la boîte de vitesse comportant trois arbres, l'organe de frottement est positionné de préférence sur l'arbre secondaire portant le moins d'éléments formant les rapports de vitesse afin d'exploiter de manière optimale l'espace axial disponible sur la boîte de vitesses.

. En effet, dans le cas d'une boîte de vitesses à deux arbres, l'implantation de l'organe de frottement nécessiterait l'augmentation de l'encombrement axial par rapport à une boîte de vitesses identique sans organe de frottement. En revanche, dans une boîte de vitesses à trois arbres, un des deux arbres secondaires (celui qui porte le moins d'éléments mécaniques) est plus court que l'autre. Dans l'invention, il est donc possible d'implanter l'organe de frottement sur l'arbre secondaire le plus court, sans augmenter l'encombrement axial global de la boîte de vitesses. En effet, dans l'invention, en implantant l'organe de frottement sur l'arbre secondaire le plus court, on obtient une boîte de vitesses comportant deux arbres secondaires présentant une longueur sensiblement identique.

. Ainsi la boîte de vitesses à trois arbres selon l'invention est axialement plus compacte qu'une boîte de vitesses à deux arbres à iso-nombre de rapports de vitesse et à iso-couple transmissible, ce qui présente un intérêt pour l'implantation de ladite boîte sur un véhicule à moteur transversal.

. En variante, on utilise aussi un deuxième organe de frottement associé à un rapport intermédiaire autre que la première et la marche arrière, afin de combler plus efficacement les ruptures de couple pour les rapports inférieurs. Dans l'exemple de la boîte de vitesses à six rapports, le deuxième synchroniseur est par exemple associé au rapport de troisième.
L'invention concerne donc une boîte de vitesses de type manuelle pilotée conforme à l'objet de la revendication 1.

. Selon une réalisation, les deux arbres secondaires présentent une longueur sensiblement identique, l'organe de frottement étant monté sur l'arbre secondaire portant le moins d'éléments mécaniques de manière à optimiser l'encombrement axial de la boîte de vitesses.

. Selon une réalisation, l'organe de frottement est associé au rapport de vitesse le plus élevé de la boîte de vitesses.

. Selon une réalisation, les crabots des pignons fous présentent un profil avec une rampe ayant une pente qui diminue progressivement de la face de tirage vers la face rétro de ces pignons fous.

. Selon une réalisation, les rapports de vitesses sont rassemblés par paire avec un seul manchon de crabotage par paire, le manchon de crabotage d'une paire engageant l'un des deux pignons par déplacement dans une direction et l'autre pignon fou par déplacement dans l'autre direction.

. Selon une réalisation, les paires de pignons fous sont agencées dans une configuration de rapport du type première-quatrième, deuxième-cinquième, troisième-sixième vitesse ou première-troisième, quatrième-sixième, deuxième-cinquième vitesse de manière à pouvoir engager deux rapports numériquement successifs avec des manchons de crabotage différents.

. Selon une réalisation, elle comporte six rapports de vitesse, l'organe de frottement étant associé au rapport de sixième.

. Selon une réalisation, l'organe de frottement est un synchroniseur de grande capacité énergétique, ou un embrayage de type multi-disques humides, ou un embrayage sec, ou un synchroniseur de type multi-cônes humides.

. Selon une réalisation, les rapports de première, deuxième, troisième, et cinquième sont formés chacun par une roue liée en rotation à l'arbre primaire et un pignon fou lié à un des arbres secondaires, et les rapports de quatrième et sixième sont formés chacun par une roue liée en rotation à l'arbre primaire et un pignon fou lié à l'autre arbre secondaire.

. L'invention concerne en outre un procédé de changement de rapport de vitesse montant selon la revendication 10 avec couple positif pour passer d'un rapport initial N à un rapport final N+1, ce procédé mettant en oeuvre la boîte de vitesses selon l'invention et comportant les étapes suivantes :
- ouvrir l'embrayage de manière à le mettre à la limite du couple fourni par le moteur thermique,
- positionner le manchon de crabotage du rapport initial N en position auto-éjectable,
- actionner l'organe de frottement de manière à réduire progressivement le couple transmis par le rapport initial N jusqu'au couple nul de manière à inverser le flanc menant du crabot du rapport initial pour que le manchon de crabotage du rapport initial s'éjecte mécaniquement,
- piloter la diminution du régime de l'arbre primaire jusqu'à atteindre sensiblement le régime du rapport final N+1 par action sur l'organe de frottement,
- engager le rapport final N+1 en positionnant le manchon de crabotage auto-éjectant qui lui est associé en position de verrouillage,
- réduire progressivement le couple transmis par l'organe de frottement, de sorte que tout le couple soit transmis aux roues par le rapport final, et
- fermer progressivement l'embrayage.

. Selon une mise en oeuvre, il comporte l'étape suivante :
- utiliser l'organe de frottement pour positionner le manchon de crabotage du rapport initial N en position auto-éjectable.

. L'invention concerne en outre un procédé de changement de rapport de vitesse descendant selon la revendication 12 avec couple positif pour passer d'un rapport initial N à un rapport final N-1, ce procédé mettant en oeuvre la boîte de vitesses selon l'invention et comportant les étapes suivantes :
- ouvrir l'embrayage de manière à le mettre à la limite du couple fourni par le moteur thermique,
- positionner le crabot du rapport initial N en position auto-éjectable,
- actionner l'organe de frottement de manière à transmettre un couple de dérivation via cet organe aux roues, afin de réduire progressivement le couple transmis par le rapport initial N de manière à inverser le flanc menant du crabot du rapport initial N pour que ce crabot s'éjecte mécaniquement,
- diminuer le régime de l'arbre primaire de manière s'assurer que le crabot du rapport initial N est éjecté,
- accélérer le moteur thermique de manière à lui faire atteindre le régime cible du rapport final N-1 à engager,
- piloter le régime de l'arbre primaire jusqu'à atteindre sensiblement le régime du rapport final N-1 à engager par action sur l'organe de frottement et de l'embrayage,
- engager le rapport final N-1 en positionnant le crabot auto-éjectant qui lui est associé en position de verrouillage,
- réduire progressivement le couple transmis par l'organe de frottement de manière que tout le couple soit transmis aux roues par le rapport engagé N-1, et
- fermer progressivement l'embrayage.

. Selon une mise en oeuvre, il comporte l'étape suivante :
- utiliser l'organe de frottement pour positionner le manchon de crabotage du rapport initial N en position auto-éjectable.

. Selon une mise en oeuvre, l'accélération du moteur thermique est effectuée avant de positionner le manchon de crabotage du rapport initial N en position auto-éjectable, afin de limiter le couple transmis via l'organe de frottement.

. L'invention concerne également un procédé de changement de rapport de vitesse montant ou descendant à couple négatif selon la revendication 15 pour passer d'un rapport initial à un rapport final, ce procédé mettant en oeuvre la boîte de vitesses selon l'invention et comportant les étapes suivantes :
- ouvrir complètement l'embrayage,
- dégager le rapport initial,
- piloter le régime de l'arbre primaire via l'ouverture partielle de l'organe de frottement,
- engager le rapport final, et
- fermer l'embrayage.

. L'invention concerne par ailleurs l'utilisation de la boîte de vitesses selon l'invention, dans laquelle on ralentit l'arbre primaire avant d'engager la marche arrière par action de l'organe de frottement avant engagement, comme revendiqué dans la revendication 16.

. L'invention sera mieux comprise à la lecture de la description qui suit et à l'examen des figures qui l'accompagnent. Ces figures ne sont données qu'à titre illustratif mais nullement limitatif de l'invention. Elles montrent :

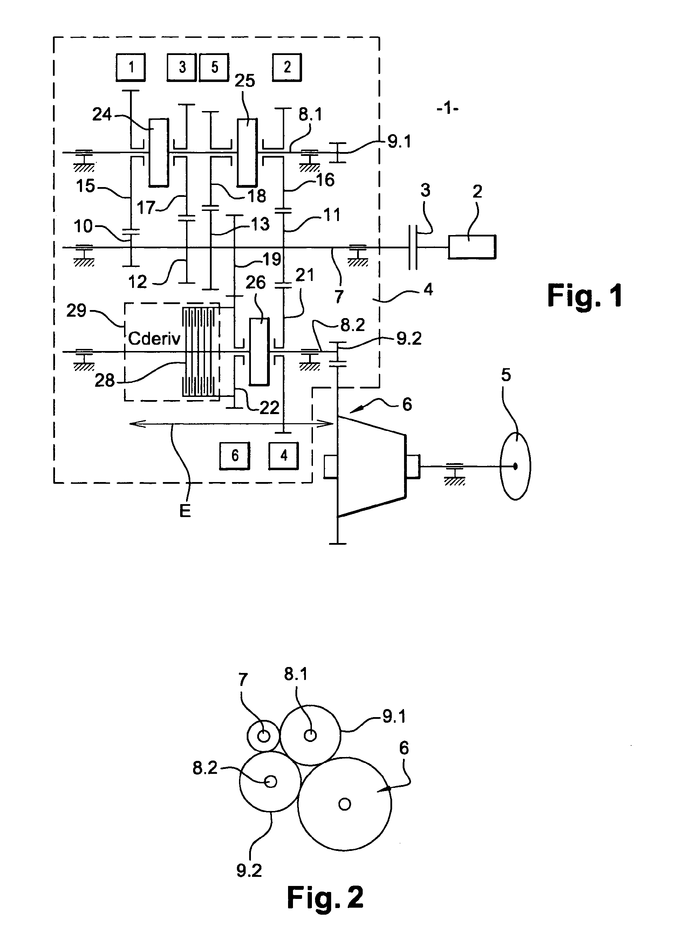

. Figure 1 : une représentation schématique d'une chaîne de traction comportant une boîte de vitesses à 6 rapports selon l'invention à deux arbres secondaires munie d'un organe de frottement associé au rapport de 6^{ème} ;

. Figure 2 : une vue de côté de l'agencement des arbres primaire et secondaires et de la descente de pont de la boîte de vitesses selon l'invention ;

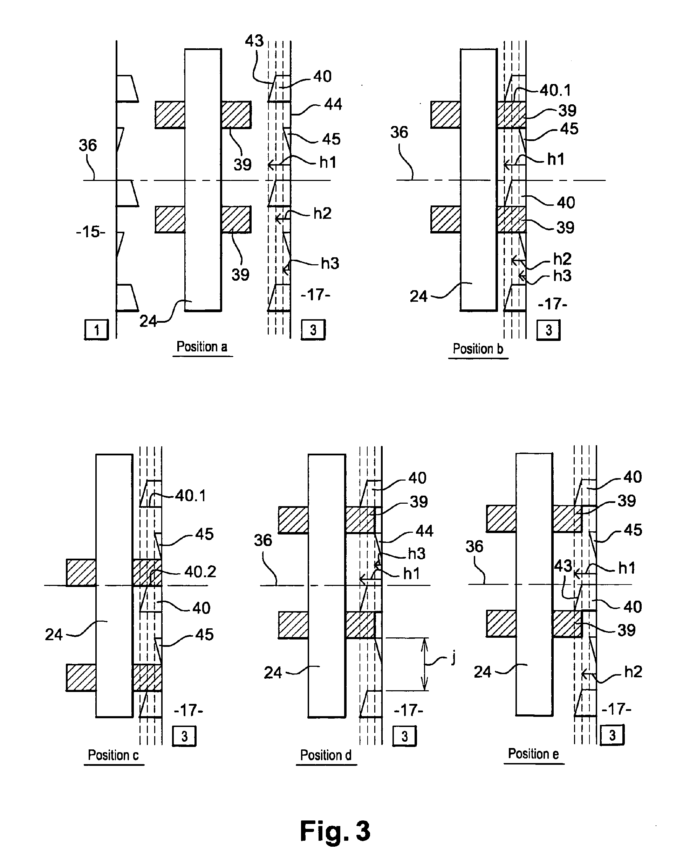

. Figure 3 : des représentations schématiques des différentes positions que peut prendre un manchon de crabotage selon l'invention.

. La figure 1 montre une chaîne 1 de traction d'un véhicule automobile formée par un moteur 2 thermique, un embrayage 3, une boîte 4 de vitesses délimitée par une ligne fermée discontinue, et des axes de sortie d'un différentiel vers les roues 5. L'embrayage 3 est relié d'une part au moteur 2 thermique et d'autre part à la boîte 4 de vitesses. Le différentiel 6 assure la liaison entre la boîte de vitesses 4 et les roues 5 du véhicule.

. En variante, la chaîne 1 de traction est complétée par une machine électrique (non représentée) positionnée sur l'arbre d'entrée de la boîte 4 de vitesse entre l'embrayage 3 et la boîte 4 de vitesses.

. Plus précisément, la boîte 4 de vitesses comporte un arbre 7 primaire lié en rotation aux deux arbres secondaires 8.1, 8.2 via des engrenages formant les rapports de la première à la sixième vitesse encadrés sur la figure. Ces deux arbres secondaires 8.1, 8.2 sont liés en rotation avec la descente de pont 6 via les roues dentées 9.1 et 9.2, comme représenté sur la figure 2.

. Les rapports de première, deuxième, troisième et cinquième vitesse sont formés chacun par une roue 10-13 liée en rotation à l'arbre 7 primaire et un pignon fou 15-18 lié à l'arbre secondaire 8.1. Les rapports de quatrième et sixième sont formés chacun par une roue 11, 19 liée en rotation à l'arbre primaire 7 et un pignon fou 21, 22 lié à l'arbre secondaire 8.2. Pour plus de simplicité, le rapport de marche arrière n'est pas représenté.

. Ces rapports de vitesse sont rassemblés par paire avec un seul manchon de crabotage 24-26 par paire. Ainsi les manchons 24 et 25 montés sur l'arbre secondaire 8.1 sont respectivement positionnés entre les rapports de première et de troisième, et entre les rapports de deuxième et de cinquième. Le manchon 26 monté sur l'arbre secondaire 8.2 est positionné entre les rapports de quatrième et de sixième.

. Chaque manchon 24-26 est lié en rotation sur l'arbre sur lequel il est monté et mobile axialement suivant l'axe de cet arbre. Chaque manchon 24-26 engage l'un des deux pignons fous entre lesquels il se situe par déplacement dans une direction et l'autre pignon par déplacement dans l'autre direction. A cet effet, chaque manchon 24-26 comporte une couronne de crabots destinés à entrer en coopération avec les crabots des pignons fous auxquels ils sont associés.

. En outre, un organe de frottement 28 est associé au rapport le plus élevé, ici le rapport de sixième. Cet organe 28 est monté sur l'arbre secondaire 8.2 le plus court qui porte le moins d'éléments 21, 22, 26 mécaniques. Plus précisément, l'organe 28 est monté sur la partie libre 29 de l'arbre 8.1 en regard des rapports de première, troisième et cinquième de manière à limiter l'encombrement axial E global de la boîte de vitesses 4. Lorsque l'organe 28 est implanté sur l'arbre secondaire 8.2, les arbres secondaires 8.1, 8.2 présentent sensiblement la même longueur.

. Dans cette réalisation, le pignon fou 22 du rapport de sixième présente ainsi d'un côté l'organe de frottement 28 et de l'autre le manchon de crabotage 26.

. Cet organe de frottement 28 a pour rôle d'éviter les ruptures de couple lors des changements de rapport. A cet effet, l'organe 28 est apte à assurer par frottement une liaison mécanique entre l'arbre 8.2 sur lequel il est monté et le pignon fou 22 du rapport de sixième, de manière à transmettre du couple aux roues 5 pendant le changement de rapport.

. L'organe de frottement 28 utilisé peut être par exemple un synchroniseur de grande capacité énergétique, mais aussi un embrayage de type multidisques humides, ou même un embrayage sec. De préférence, le synchroniseur 28 présente une architecture du type à multi-cônes humides, ce synchroniseur à multi-cônes comportant par exemple sept cônes en frottement les uns par rapport aux autres.

. En variante, certains ou tous les rapports de vitesse sont formés par une roue solidaire en rotation à un des deux arbres secondaires 8.1, 8.2 et un pignon fou monté sur l'arbre primaire 7 qui engrènent entre eux.

. En variante, la boîte de vitesses 4 comporte plus ou moins de six rapports. En variante, l'organe 28 est associé à un rapport inférieur au rapport le plus grand. En variante, la boîte de vitesses 4 comporte plus de deux arbres secondaires.

. La figure 3 montre des représentations schématiques du manchon de crabotage 24 auto-éjectants monté sur l'arbre 8.1 entre les pignons fous 15 et 17 des rapports de première et de troisième selon cinq positions a, b, c, d et e, ce manchon 24 étant semblable aux manchons 25 et 26.

. Le manchon 24 est lié en rotation sur l'arbre 8.1 et mobile axialement suivant l'axe 36 dudit arbre 8.1. Le manchon 24 comporte une couronne de crabots ou dents 39 destinées à entrer en coopération avec des crabots ou dents 40 associées aux pignons fous 15 et 17. Les dents 40 présentent une hauteur h1 par rapport à la face radiale des pignons fous.

. En outre, chaque pignon 15, 17 comporte des rampes 43 sur le flan rétro 40.2 de ses dents (ce flan rétro assure la transmission du couple lorsqu'un couple positif est transmis des roues du véhicule vers le moteur).

. Ces rampes 43 s'étendent entre les niveaux h1 et h2 par rapport à la face 44 du pignon, le niveau h2 étant inférieur à h1. Ces rampes 43 présentent une pente qui diminue progressivement de la face de tirage 40.1 vers la face rétro 40.2. Les dents 40 présentent ainsi un profil en forme de trapèze. Dans une réalisation, ces rampes 43 présentent une inclinaison comprise environ entre 10 et 40 degrés.

. De préférence, chaque pignon 15, 17 comporte en outre des étages 45 de verrouillage positionnés régulièrement sur sa face 44 radiale, entre les dents 39. Ces étages 45 présentent une hauteur h3 par rapport à la face 44 des pignons fous, h3 étant inférieur à h2.

. Ces étages 45 de verrouillage permettent de limiter le jeu de ré-attelage j entre les dents 39 du manchon et les dents 40 du pignon en position verrouillée. Ces étages 45 présentent un profil triangulaire de manière à faciliter le verrouillage du rapport de vitesse, l'inclinaison des étages 45 étant opposée à celle des rampes 43 (les valeurs des angles d'inclinaison des étages 45 et des rampes 43 ne sont pas forcément égales).

. De préférence, les dents 39 sont disposées régulièrement autour du manchon 27, et présentent une dimension égale à la distance qui sépare un étage 45 de verrouillage d'une dent 40.

. Le manchon de crabotage 24 est apte à prendre cinq positions différentes : une position neutre (position a), une position rapport verrouillé (position b), une position rapport verrouillé avec un jeu de ré-attelage non verrouillé (position c), une position rapport engagé avec un jeu de ré-attelage important (position d), et une position auto-éjectable (position e).

. Dans la position a, neutre, les dents 39 du manchon 24 sont positionnées à une distance des faces 44 radiales des pignons supérieure à h1. Ainsi, aucun des pignons fous 15, 17 n'est lié en rotation avec l'arbre 8.1 et donc aucun des rapports de première et de troisième n'est engagé.

. Dans la position b, rapport verrouillé, les dents 39 du manchon 24 sont bloquées entre les faces 40.1 de tirage des dents 40 et les faces de l'étage 45 perpendiculaires à la face radiale du pignon fou 15. Le pignon fou 15 est alors lié en rotation à l'arbre 8.1 sur lequel est monté le manchon 24. Lors de la transmission d'un couple moteur, les dents 39 prennent appui sur les faces 40.1 de tirage des dents 40 des pignons. Tandis que lors de la transmission d'un couple de freinage de type frein moteur, les dents 39 du manchon 24 prennent appui sur les étages 45 de verrouillage. Dans la position b, le jeu de ré-attelage est minimum.

. Dans la position c, rapport verrouillé avec un jeu de ré-attelage non verrouillé, les dents 39 sont plaquées contre le pignon fou 15 entre le flan 40.2 rétro des dents 40 et la face inclinée des étages 45. Une telle position est mise en oeuvre par exemple dans le cas d'un changement de rapport descendant. Dans ce cas, dès qu'un couple positif sera transmis du moteur vers les roues, le flanc 45 garantit le passage de la position c à b.

. Dans la position d, rapport engagé avec jeu j de ré-attelage important, les dents 39 se situent à une distance comprise entre h2 et h3 de la face 44 du pignon 15. Une telle position est observable à l'engagement du rapport, avant le verrouillage de ce rapport.

. Dans la position e, auto-éjectable, les dents 39 du manchon 24 sont à une distance située entre h1 et h2. Ainsi, les dents 39 peuvent transmettre du couple en prenant appui contre les faces 40.1 lorsque la vitesse de rotation du manchon 24 est supérieure à celle du pignon 17.

. Dès que la vitesse de l'arbre 7 primaire diminue et que la vitesse de rotation du pignon 17 devient inférieure à celle du manchon 24. Les dents 39 suivent alors la rampe 43 et s'éloignent de la face 44 du pignon fou, de sorte que le rapport de vitesse est désengagé.

. Pour assurer les déplacements axiaux du manchon 24, la boîte 4 de vitesses comporte un actionneur (non représenté) commandé par le calculateur de boîte de vitesses.

. Lors d'un changement de rapport montant du rapport N vers le rapport N+1 sous couple moteur (« tirage »), les manchons de crabotage de ces rapports présentent les états successifs suivants.

. Dans l'état initial, le manchon du rapport N est en position b (rapport verrouillé, avec un jeu de ré-attelage quasi-inexistant). Tandis que le manchon du rapport N+1 est en position a, soit en position neutre. L'embrayage 3 est ouvert de manière à être à la limite du couple fourni par le moteur 2 thermique.

. Ensuite, le manchon du rapport N est positionné en position e (auto-éjectable). A cet instant, le couple moteur est toujours transmis par le rapport N. Le manchon de crabotage du rapport N+1 se trouve encore en position a.

. Pour positionner le manchon du rapport N en position auto-éjectable, on utilise de préférence l'organe 28 de frottement. En effet, sous fort couple transmis, il est difficile de déplacer le manchon à cause de l'angle d'anti-lâcher (la force axiale d'extraction étant proportionnelle au couple transmis et à l'angle d'anti-lâcher). En conséquence, il est possible d'actionner brièvement l'organe 28 de frottement afin de diminuer le couple transmis via le rapport initial N (et donc la force axiale nécessaire à l'extraction du rapport).

. Ensuite, l'organe 28 de frottement est progressivement actionné de façon à transmettre un couple de dérivation Cderiv croissant. Au moment où le couple de frottement Cderiv généré par l'organe 28 est suffisant, la vitesse de l'arbre 7 primaire et des éléments qui lui sont liés diminue.

. Le pignon du rapport N voit donc sa vitesse diminuer alors que le crabot (en position axiale e) conserve une vitesse de rotation constante (celle de l'arbre 8.1 secondaire). La face 43 d'éjection des dents 40 du pignon du rapport de N entre donc en contact avec les dents du manchon qui lui est associé, ce qui a pour conséquence d'éjecter ledit manchon, qui revient en position neutre (rapport désengagé).

. Le manchon du rapport N est en position a et le manchon du rapport N+1 est de préférence en position b (il peut également être dans la position c), le rapport N+1 étant engagé sensiblement à l'instant où la vitesse de rotation du pignon du rapport N+1 est égale à celle de l'arbre 8.1 secondaire (dont le manchon est solidaire en rotation). On évite ainsi le choc de crabotage du au fait qu'il existe une différence de vitesse de rotation entre les deux éléments à craboter.

. On diminue ensuite la pression appliquée sur les surfaces de frottement de l'organe 28, afin de transmettre de moins en moins de couple de dérivation par la démultiplication du rapport de sixième.

. Ensuite, le rapport N+1 étant engagé, le couple est intégralement transmis via ce rapport (autrement dit le couple de dérivation Cderiv passant par l'organe 28 est nul).

. On remarque que d'une part, un couple de dérivation Cderiv a été transmis pendant le changement de rapport, et d'autre part, que ce couple appliqué a permis d'égaliser les vitesses de rotation du manchon et du pignon du rapport cible N+1, évitant ainsi le choc de crabotage.

. En outre, il est possible d'effectuer des changements de rapports de type descendant N (N étant strictement inférieur à 6, si l'organe de dérivation se trouve sur la sixième) vers N-1 sous couple moteur positif (« kick down ») grâce à l'organe de frottement 28 monté sur la sixième suivant la séquence suivante.

. Dans une première étape, l'embrayage 3 principal est mis en phase de glissement.

. Dans une deuxième étape, un couple Cderiv de dérivation est généré par l'organe 28 de sixième, ce qui va progressivement faire chuter le régime de l'arbre 7 primaire.

. Dans une troisième étape, dès la chute de régime, le rapport N est désengagé. On diminue le régime de l'arbre 7 primaire de manière à s'assurer que le crabot du rapport initial N est éjecté.

. Dans une quatrième étape, le moteur 2 thermique est accéléré pour relancer le régime d'arbre 7 primaire (cette accélération est possible par le faible couple transmis par glissement via l'organe 28 de sixième).

. Dans une cinquième étape, lorsque la vitesse du pignon du rapport N-1 (rapport cible) est égale à celle de l'arbre 8 secondaire, l'engagement du rapport N-1 est déclenché.

. Dans une sixième étape, on ouvre l'organe 28 de sixième, de sorte qu'il ne génère plus aucun couple de dérivation Cderiv.

. L'invention peut également être utilisée pour faciliter l'engagement de la marche arrière, en freinant les inerties encore en rotation lors de la tentative d'engagement du rapport de marche arrière.

. A cet effet, on ralentit l'arbre 7 primaire avant d'engager la marche arrière par action de l'organe 28 avant engagement, ce qui autorise l'utilisation de la technologie crabots en évitant ses inconvénients connus.

## Revendications

1. Boîte de vitesses de type manuelle pilotée comportant:
- un arbre primaire (7) destiné à être relié à un moteur (2) thermique, et au moins deux arbres secondaires (8.1, 8.2) destinés à être reliés aux roues (5) du véhicule via une descente de pont (6), l'arbre primaire (7) étant lié angulairement aux deux arbres secondaires (8.1, 8.2) via des engrenages formant les rapports de vitesse,
- ces engrenages étant formés chacun par une roue (10-13, 19) solidaire en rotation de l'arbre primaire (7) et par un pignon fou (15-18, 21, 22) monté sur un des deux arbres secondaires (8.1, 8.2) qui engrènent entre eux, ou par une roue (15-18, 21, 22) solidaire en rotation d'un des deux arbres secondaires (8.1, 8.2) et par un pignon fou (15-18, 21, 22) monté sur l'arbre primaire (7) qui engrènent entre eux,
- des manchons (24-26) de crabotage associables chacun à au moins un pignon fou, ces manchons (24-26) de crabotage assurant les changements de rapport de vitesse ; chaque manchon de crabotage (24-26) étant apte à prendre cinq positions différentes : une position neutre (position a), une position rapport verrouillé (position b), une position rapport verrouillé avec un jeu de ré-attelage non verrouillé (position c), une position rapport engagé avec un jeu de ré-attelage important (position d), et une position auto-éjectable (position e),
cette boîte de vitesses (4) comportant en outre :
- un organe de frottement (28) associé à un rapport de vitesse, cet organe de frottement (28) transmettant du couple (Cderiv) de manière temporaire aux roues lors des changements de rapports via ce rapport de démultiplication, et en ce que,
- les crabots des manchons et des pignons fous sont auto-éjectants, ces crabots auto-éjectants étant tels qu'ils éjectent le rapport précédent (N-1) lorsqu'un nouveau rapport (N) est engagé.

2. Boîte de vitesses selon la revendication 1, **caractérisée en ce que** les deux arbres secondaires (8.1, 8.2) présentent une longueur sensiblement identique, l'organe de frottement (28) étant monté sur l'arbre secondaire (8.2) portant le moins d'éléments mécaniques de manière à optimiser l'encombrement axial de la boîte de vitesses (4).

3. Boîte de vitesses selon la revendication 1 ou 2, **caractérisée en ce que** l'organe de frottement (28) est associé au rapport de vitesse le plus élevé de la boîte de vitesses.

4. Boîte de vitesses selon l'une des revendications 1 à 3, **caractérisée en ce que** les crabots des pignons fous (15-18, 21, 22) présentent un profil avec une rampe (43) ayant une pente qui diminue progressivement de la face de tirage (40.1) vers la face rétro (40.2) de ces pignons fous.

5. Boîte de vitesses selon l'une des revendications 1 à 4, **caractérisée en ce que** les rapports de vitesses sont rassemblés par paire avec un seul manchon de crabotage (24-26) par paire, le manchon de crabotage (24-26) d'une paire engageant l'un des deux pignons par déplacement dans une direction et l'autre pignon fou par déplacement dans l'autre direction.

6. Boîte de vitesses selon l'une des revendications 1 à 5, **caractérisée en ce que** les paires de pignons fous sont agencées dans une configuration de rapport du type première-quatrième, deuxième-cinquième, troisième-sixième vitesse ou première-troisième, quatrième-sixième, deuxième-cinquième vitesse de manière à pouvoir engager deux rapports numériquement successifs avec des manchons de crabotage différents.

7. Boîte de vitesses selon l'une des revendications 1 à 6, **caractérisée en ce qu'**elle comporte six rapports de vitesse, l'organe de frottement (28) étant associé au rapport de sixième.

8. Boîte de vitesses selon l'une des revendications 1 à 7, **caractérisée en ce que** l'organe de frottement (28) est un synchroniseur de grande capacité énergétique, ou un embrayage de type multi-disques humides, ou un embrayage sec, ou un synchroniseur de type multi-cônes humides.

9. Boîte de vitesses selon l'une des revendications 1 à 8, **caractérisée en ce que** :
- les rapports de première, deuxième, troisième, et cinquième sont formés chacun par une roue (10-13) liée en rotation à l'arbre (7) primaire et un pignon fou (15-18) lié à un des arbres secondaires (8.1),
- les rapports de quatrième et sixième sont formés chacun par une roue (11, 19) liée en rotation à l'arbre primaire (7) et un pignon fou (21, 22) lié à l'autre arbre secondaire (8.2).

10. Procédé de changement de rapport de vitesse montant avec couple positif pour passer d'un rapport initial (N) à un rapport final (N+1), ce procédé mettant en oeuvre la boîte (4) de vitesses définie selon l'une des revendications 1 à 9 et comportant les étapes suivantes :
- ouvrir l'embrayage (3) de manière à le mettre à la limite du couple fourni par le moteur (2) thermique,
- positionner le manchon de crabotage du rapport initial (N) en position auto-éjectable (position e),
- actionner l'organe (28) de frottement de manière à réduire progressivement le couple transmis par le rapport initial (N) jusqu'au couple nul de manière à inverser le flanc menant du crabot du rapport initial pour que le manchon de crabotage du rapport initial s'éjecte mécaniquement,
- piloter la diminution du régime de l'arbre (7) primaire jusqu'à atteindre sensiblement le régime du rapport final (N+1) par action sur l'organe (28) de frottement,
- engager le rapport final (N+1) en positionnant le manchon de crabotage auto-éjectant qui lui est associé en position de verrouillage (position b, ou c puis b),
- réduire progressivement le couple (Cderiv) transmis par l'organe (28) de frottement, de sorte que tout le couple soit transmis aux roues (5) par le rapport final (N+1), et
- fermer progressivement l'embrayage (3).

11. Procédé selon la revendication 10, **caractérisé en ce qu'**il comporte l'étape suivante :
- utiliser l'organe (28) de frottement pour positionner le manchon de crabotage du rapport initial (N) en position auto-éjectable (position e).

12. Procédé de changement de rapport de vitesse descendant avec couple positif pour passer d'un rapport initial (N) à un rapport final (N-1), ce procédé mettant en oeuvre la boîte (4) de vitesses définie selon l'une des revendications 1 à 9 et comportant les étapes suivantes :
- ouvrir l'embrayage (3) de manière à le mettre à la limite du couple fourni par le moteur (2) thermique,
- positionner le crabot du rapport initial (N) en position auto-éjectable (position e),
- actionner l'organe (28) de frottement de manière à transmettre un couple de dérivation (Cderiv) via cet organe (28) aux roues, afin de réduire progressivement le couple transmis par le rapport initial (N) de manière à inverser le flanc menant du crabot du rapport initial (N) pour que ce crabot s'éjecte mécaniquement,
- diminuer le régime de l'arbre (7) primaire de manière s'assurer que le crabot du rapport initial (N) est éjecté,
- accélérer le moteur (2) thermique de manière à lui faire atteindre le régime cible du rapport final (N-1) à engager,
- piloter le régime de l'arbre (7) primaire jusqu'à atteindre sensiblement le régime du rapport final (N-1) à engager par action sur l'organe (28) de frottement et de l'embrayage (3),
- engager le rapport final (N-1) en positionnant le crabot auto-éjectant qui lui est associé en position de verrouillage (position b, ou c puis b),
- réduire progressivement le couple transmis (Cderiv) par l'organe (28) de frottement de manière que tout le couple soit transmis aux roues (5) par le rapport engagé (N-1), et
- fermer progressivement l'embrayage (3).

13. Procédé selon la revendication 12, **caractérisé en ce qu'**il comporte l'étape suivante :
- utiliser l'organe (28) de frottement pour positionner le manchon de crabotage du rapport initial (N) en position auto-éjectable.

14. Procédé selon la revendication 12 ou 13, **caractérisé en ce que** :
- l'accélération du moteur (2) thermique est effectuée avant de positionner le manchon de crabotage du rapport initial (N) en position auto-éjectable, afin de limiter le couple transmis via l'organe de frottement (28).

15. Procédé de changement de rapport de vitesse montant ou descendant à couple négatif pour passer d'un rapport initial à un rapport final, ce procédé mettant en oeuvre la boîte (4) de vitesses définie selon l'une des revendications 1 à 9 et comportant les étapes suivantes :
- ouvrir complètement l'embrayage (3),
- dégager le rapport initial,
- piloter le régime de l'arbre (7) primaire via l'ouverture partielle de l'organe (28) de frottement,
- engager le rapport final, et
- fermer l'embrayage (3).

16. Utilisation de la boîte (4) de vitesses selon l'une des revendications 1 à 9, dans laquelle on ralentit l'arbre (7) primaire avant d'engager la marche arrière par action de l'organe (28) de frottement avant engagement.

## Claims

1. An automatically-controlled manual gear box, comprising:
- a primary shaft (7) for connection to a heat engine (2) and at least two secondary shafts (8.1, 8.2) for connection to the wheels (5) of the vehicle via an axle drop (6), the primary shaft (7) being connected at an angle to the two secondary shafts (8.1, 8.2) via gear wheels forming the gear ratios,
- these gears each comprising a wheel (10-13, 19) that is rotationally fixed with the primary shaft (7) and an idling gear (15-18, 21, 22) mounted on one of the two secondary shafts (8.1, 8.2), which mesh with each other, or comprising a wheel (15-18, 21, 22) that is rotationally fixed with one of the two secondary shafts (8.1, 8.2) and an idling gear (15-18, 21, 22) mounted on the primary shaft (7), which mesh with each other,
- dog clutch sleeves (24-26), each of which being attachable to at least one idling gear, these dog clutch sleeves (24-26) providing the gear ratio shift; each dog clutch sleeve (24-26) being capable of adopting five different positions: a neutral position (position a), a ratio locked position (position b), a ratio locked position with an unlocked recoupling play (position c), a ratio engaged position with a large unlocking coupling play (position d), and a self-ejecting position (position e),
this gearbox (4) further comprising:
- a friction member (28) associated with a reduction ratio, this friction member (28) temporarily transmitting torque (Cderiv) to the wheels during gear ratio shifts by this reduction ratio,
- the dogs of the sleeves and idling gears are self-ejecting, these self-ejecting dogs being such that they eject the previous ratio (N-1) when a new ratio (N) is engaged.

2. The gear box according to claim 1, **characterised in that** the two secondary shafts (8.1, 8.2) are of essentially the same length, the friction member (28) being mounted on the secondary shaft (8.2) which supports the fewest mechanical elements so as to optimise the axial dimensions of the gearbox (4).

3. The gear box according to either of claims 1 or 2, **characterised in that** the friction member (28) is associated with the highest gear ratio in the gearbox.

4. The gear box according to any of claims 1 to 3, **characterised in that** the dogs of the idling gears (15-18, 21, 22) have a slanting profile (43) the slope of which diminishes progressively from the gripping face (40.1) towards the rear face (40.2) of these idling gears.

5. The gear box according to any of claims 1 to 4, **characterised in that** the gear ratios are ganged in pairs with only one dog clutch sleeve (24-26) per pair, the clutch sleeve (24-26) of one pair engaging with one of the two idling gears by moving in one direction and the other idling gear engaging by moving in the other direction.

6. The gear box according to any of claims 1 to 5, **characterised in that** the pairs of idling gears are arranged in a reduction configuration of the type first-fourth, second-fifth, third-sixth gear or first-third, fourth-sixth, second-fifth gear so that it is possible to engage two numerically adjacent gears with different clutch sleeves.

7. The gear box according to any of claims 1 to 6, **characterised in that** it comprises six gear ratios, the friction member (28) being associated with the sixth gear ratio

8. The gear box according to any of claims 1 to 7, **characterised in that** the friction member (28) is a high-energy synchroniser or a clutch of the wet multidisc type, or a dry clutch, or a synchroniser of the wet multi-cone type.

9. The gear box according to any of claims 1 to 8, **characterised in that**:
- the first, second, third and fifth gear ratios are each formed by a wheel (10-13) connected in rotary manner to the primary shaft (7) and an idling gear (15-18) connected to one of the secondary shafts (8.1),
- the fourth and sixth gear ratios are each formed by a wheel (11, 19) connect in rotary manner to the primary shaft (7) and an idling gear (21, 22) connected to the other secondary shaft (8.2).

10. An upward gear shifting method with positive torque for shifting from an initial gear (N) to a final gear (N+1), which method implements the gear box (4) defined in any of claims 1 to 9 and comprises the following steps:
- opening the clutch (3) so as to put it at the limit of the torque provided by the heat engine (2),
- placing the dog clutch sleeve of the initial gear (N) in the self-ejecting position (position e),
- actuating the friction member (28) such that the torque transmitted by the initial gear (N) is gradually reduced to zero torque so as to reverse the leading flank of the dog of the initial gear so that the dog clutch sleeve of the initial gear auto-ejects mechanically,
- controlling the load decrease of the primary shaft (7) until the load of the final gear (N+1) to be engaged is substantially achieved by acting on the friction member (28),
- engaging the final gear (N+1) by placing the self-ejecting clutch sleeve associated therewith in the locking position (position b, or c then b),
- gradually decreasing the torque (Cderiv) transmitted by the friction member (28), such that the entire torque is transmitted to the wheels (5) by the final gear (N+1), and
- gradually closing the clutch (3).

11. The method according to claim 10, **characterised in that** it comprises the following step:
- using the friction member (28) to place the clutch sleeve of the initial gear (N) in the auto-ejection position (position e).

12. A downward gear shifting method with positive torque for shifting from an initial gear (N) to a final gear (N-1), which method implements the gear box (4) defined in any of claims 1 to 9 and comprises the following steps:
- opening the clutch (3) so as to put it at the limit of the torque provided by the heat engine (2),
- placing the dog of the initial gear (N) in the self-ejecting position (position e),
- actuating the friction member (28) so as to transmit a bypass torque (Cderiv) via this member (28) to the wheels, so as to gradually reduce the torque transmitted by the initial gear (N) such that the leading flank of the dog of the initial gear (N) is reversed so that the dog is auto-ejected mechanically,
- decreasing the load of the primary shaft (7) such as to ensure that the dog of the initial gear (N) is ejected,
- accelerating the heat engine (2) to bring it to the target load of the final gear (N-1) to be engaged,
- adjusting the load on the primary shaft (7) until it is essentially equivalent to the load on the final gear (N-1) to be engaged by action on the friction member (28) and the clutch (3),
- engaging the final gear (N-1) by positioning the auto-ejecting dog associated with it in the locking position (position b, or c then b),
- gradually decreasing the torque (Cderiv) transmitted by the friction member (28) so that the entire torque is transmitted to the wheels (5) by the engaged gear ratio (N-1), and
- gradually closing the clutch (3).

13. The method according to claim 12, **characterised in that** it comprises the following step:
- using the friction member (28) for placing the clutch sleeve of the initial gear ratio (N) in the self-ejecting position.

14. The method according to either of claim 12 or 13, **characterised in that**:
- the heat engine (2) acceleration is performed before the dog of the initial ratio (N) is placed in the self-ejecting position, so as to limit the torque that is transmitted via the friction member (28).

15. An upward or downward gear shifting method with negative torque for shifting from an initial gear to a final gear, which method implements the gear box (4) defined in any of claims 1 to 9 and comprises the following steps:
- fully opening the clutch (3),
- disengaging the initial ratio,
- controlling the load of the primary shaft (7) by partly opening the friction member (28),
- engaging the final gear ratio, and
- closing the clutch (3).

16. A use of the gear box (4) according to any of claims 1 to 9, wherein the primary shaft (7) is slowed down before engaging the reverse gear by action of the friction member (28) prior to engagement.

## Patentansprüche

1. Schaltgetriebe des gesteuerten manuellen Typs, aufweisend:
- eine Hauptwelle (7), die dazu bestimmt ist, mit einem Verbrennungsmotor (2) verbunden zu werden, und mindestens zwei Nebenwellen (8.1, 8.2), die dazu bestimmt sind, über einen Radantrieb (6) mit den Rädern (5) des Fahrzeugs verbunden zu werden, wobei die Hauptwelle (7) winkelig mit den zwei Nebenwellen (8.1, 8.2) über Radgetriebe, die Getriebeübersetzungen bilden, verbunden sind,
- wobei diese Radgetriebe jeweils aus einem Rad 10-13, 19), das in Drehung fest mit der Hauptwelle (7) verbunden ist, und einem Freilaufzahnrad (15-18, 21, 22), das auf eine der zwei Nebenwellen (8.1, 8.2) montiert ist, die untereinander eingreifen, gebildet sind, oder aus einem Rad (15-18, 21, 22), das in Drehung fest mit einer der zwei Nebenwellen (8.1, 8.2) und mit einem Freilaufzahnrad (15-18, 21, 22), das auf die Hauptwelle (7) montiert ist, die untereinander eingreifen, gebildet sind,
- Klauenkupplungsmuffen (24-26), die jeweils mit mindestens einem Freilaufzahnrad verbunden werden können, wobei diese Klauenkupplungsmuffen (24-26) die Gangwechsel sicherstellen, wobei jede Klauenkupplungsmuffe (24-26) fünf unterschiedliche Positionen einnehmen kann: eine neutrale Position (Position a), eine verriegelte Gangposition (Position b), eine verriegelte Gangposition mit einem nicht verriegelten Wiederkopplungsspiel (Position c), eine eingerückte Gangposition mit einem großen Wiederkopplungsspiel (Position d) und eine selbst auswerfbare Position (Position e),
wobei dieses Schaltgetriebe (4) ferner Folgendes aufweist:
- ein Reibungsorgan (28), das mit einer Getriebeübersetzung verbunden ist, wobei dieses Reibungsorgan (28) Moment (Cderiv) vorübergehend an die Räder bei Gangwechseln über diese Untersetzungsstufe überträgt, und **dadurch**, dass
- die Klauen der Muffen und der Freilaufzahnräder selbst auswerfbar sind, wobei diese selbst auswerfbaren Klauen derart sind, dass sie den vorhergehenden Gang (N-1) auswerfen, wenn ein neuer Gang (N) eingerückt wird.

2. Schaltgetriebe nach Anspruch 1, **dadurch gekennzeichnet, dass** die zwei Nebenwellen (8.1, 8.2) eine im Wesentlichen gleiche Länge aufweisen, wobei das Reibungsorgan (28) auf der Nebenwelle (8.2) montiert ist, die am wenigsten mechanische Elemente trägt, um den axialen Platzbedarf des Schaltgetriebes (4) zu optimieren.

3. Schaltgetriebe nach Anspruch 1 oder 2, **dadurch gekennzeichnet, dass** das Reibungsorgan (28) mit dem höchsten Gang des Schaltgetriebes verbunden ist.

4. Schaltgetriebe nach einem der Ansprüche 1 bis 3, **dadurch gekennzeichnet, dass** die Klauen der Freilaufzahnräder (15-18, 21, 22) ein Profil mit einer Rampe (43) aufweisen, die ein Gefälle hat, das allmählich von der Zugseite (40.1) zu der Rückschaltseite (40.2) der Freilaufzahnräder abnimmt.

5. Schaltgetriebe nach einem der Ansprüche 1 bis 4, **dadurch gekennzeichnet, dass** die Gänge in Paaren mit einer einzigen Klauenkupplungsmuffe (24-26) pro Paar gepaart sind, wobei die Klauenkupplungsmuffe (24-26) eines Paars in eines der zwei Zahnräder durch Bewegung in eine Richtung und das andere Freilaufzahnrad durch Bewegung in die andere Richtung eingreift.

6. Schaltgetriebe nach einem der Ansprüche 1 bis 5, **dadurch gekennzeichnet, dass** die Freilaufzahnräderpaare in einer Gangkonfiguration des Typs erster-vierter, zweiter-fünfter, dritter-sechster Gang oder erster-dritter, vierter-sechster, zweiter-fünfter Gang derart eingerichtet sind, dass zwei zahlenmäßig aufeinander folgende Gänge mit unterschiedlichen Klauenkupplungsmuffen eingerückt werden können.

7. Schaltgetriebe nach einem der Ansprüche 1 bis 6, **dadurch gekennzeichnet, dass** es sechs Gänge aufweist, wobei das Reibungsorgan (28) mit dem sechsten Gang verbunden ist.

8. Schaltgetriebe nach einem der Ansprüche 1 bis 7, **dadurch gekennzeichnet, dass** das Reibungsorgan (28) eine Synchronisierungsvorrichtung mit großer Energiekapazität oder eine Kupplung des Typs Mehrscheiben-Nasskupplung oder eine Trockenkupplung oder eine Synchronisierungsvorrichtung des Typs Multikegel-Nassvorrichtung ist.

9. Schaltgetriebe nach einem der Ansprüche 1 bis 8, **dadurch gekennzeichnet, dass**:
- der erste, zweite, dritte und fünfte Gang jeweils aus einem Rad (10-13), das in Drehung mit der Hauptwelle (7) verbunden ist, und einem Freilaufzahnrad (15-18), das mit einer der Nebenwellen (8.1) verbunden ist, gebildet sind,
- der fünfte und der sechste Gang jeweils aus einem Rad (11, 19), das in Drehung mit der Hauptwelle (7) verbunden ist, und einem Freilaufzahnrad (21, 22), das mit der anderen Nebenwelle (8.2) verbunden ist, gebildet sind.

10. Verfahren zum Ganghochschalten mit positivem Moment, um von einem anfänglichen Gang (N) auf einen Endgang (N+1) umzuschalten, wobei dieses Verfahren das Schaltgetriebe (4), das gemäß einem der Ansprüche 1 bis 9 definiert ist, umsetzt und die folgenden Schritte aufweist:
- Öffnen der Kupplung (3) derart, dass sie auf das Limit des Moments, das von dem Verbrennungsmotor (2) geliefert wird, gestellt wird,
- Positionieren der Kupplungsmuffe des anfänglichen Gangs (N) in selbst auswerfbare Position (Position e),
- Betätigen des Reibungsorgans (28) derart, dass das Moment, das von dem anfänglichen Gang (N) übertragen wird, allmählich auf das Moment gleich null derart verringert wird, dass die Antriebsflanke der Klaue des anfänglichen Gangs umgekehrt wird, so dass sich die Klauenkupplungsmuffe des anfänglichen Gangs mechanisch auswirft,
- Steuern der Verringerung der Drehzahl der Hauptwelle (7), bis im Wesentlichen die Drehzahl des Endgangs (N+1) durch Einwirken auf das Reibungsorgan (28) erreicht wird,
- Einrücken des Endgangs (N+1) durch Positionieren der selbst auswerfbaren Klauenkupplungsmuffe, die zu ihm gehört, in Verriegelungsposition (Position b oder c und dann b),
- allmähliches Verringern des Moments (Cderiv), das von den Reibungsorgan (28) übertragen wird, derart, dass das ganze Moment von dem Endgang (N+1) auf die Räder (5) übertragen wird, und
- allmähliches Schließen der Kupplung (3).

11. Verfahren nach Anspruch 10, **dadurch gekennzeichnet, dass** es den folgenden Schritt aufweist:
- Verwenden des Reibungsorgans (28) zum Positionieren der Klauenkupplungsmuffe des anfänglichen Gangs (N) in selbst auswerfbare Position (Position e).

12. Verfahren zum Gangherunterschalten mit positivem Moment, um von einem anfänglichen Gang (N) auf einen Endgang (N-1) umzuschalten, wobei dieses Verfahren das Schaltgetriebe (4), das nach einem der Ansprüche 1 bis 9 definiert ist, umsetzt und die folgenden Schritte aufweist:
- Öffnen der Kupplung (3) derart, dass sie auf das Limit des von dem Verbrennungsmotor (2) gelieferten Moments gestellt wird,
- Positionieren der Klaue des anfänglichen Gangs (N) in selbst auswerfbare Position (Position e),
- Betätigen des Reibungsorgans (28) derart, dass ein Derivationsmoment (Cderiv) über dieses Reibungsorgan (28) an die Räder übertragen wird, um allmählich das von dem anfänglichen Gang (N) übertragene Moment derart zu verringern, dass die Antriebsflanke der Klaue des anfänglichen Gangs (N) umgekehrt wird, damit sich die Klaue mechanisch auswirft,
- Verringern der Drehzahl der Hauptwelle (7) derart, dass sichergestellt ist, dass die Klaue des anfänglichen Gangs (N) ausgeworfen wird,
- Beschleunigen des Verbrennungsmotors (2) derart, dass er die Zieldrehzahl des einzurückenden Endgangs (N-1) erreicht,
- Steuern der Drehzahl der Hauptwelle (7), bis im Wesentlichen die Drehzahl des einzurückenden Endgangs (N-1) durch Aktion auf das Reibungsorgan (28) und der Kupplung (3) erreicht wird,
- Einrücken des Endgangs (N-1), indem die selbst auswerfende Klaue, die zu ihr gehört, in Verriegelungsposition (Position b oder c und dann b) positioniert wird,
- allmähliches Verringern des von dem Reibungsorgan (28) übertragenen Moments (Cderiv) derart, dass das ganze Moment von dem eingelegten Gang (N-1) auf die Räder (5) übertragen wird und
- allmähliches Schließen der Kupplung (3).

13. Verfahren nach Anspruch 12, **dadurch gekennzeichnet, dass** es den folgenden Schritt aufweist:
- Verwenden des Reibungsorgans (28) zum Positionieren der Klauenkupplungsmuffe des anfänglichen Gangs (N) in selbst auswerfbare Position.

14. Verfahren nach Anspruch 12 oder 13, **dadurch gekennzeichnet, dass**:
- die Beschleunigung des Verbrennungsmotors (2) vor dem Positionieren der Klauenkupplungsmuffe des anfänglichen Gangs (N) in selbst auswerfbare Position ausgeführt wird, um das Moment, das über das Reibungsorgan (28) übertragen wird, einzuschränken.

15. Gangwechselverfahren zum Hochschalten oder Herunterschalten mit positivem Moment, um von einem anfänglichen Gang auf einen Endgang umzuschalten, der das Schaltgetriebe (4), das gemäß einem der Ansprüche 1 bis 9 definiert ist, umsetzt und die folgenden Schritte aufweist:
- komplettes Öffnen der Kupplung (3),
- Ausrücken des anfänglichen Gangs,
- Steuern der Drehzahl der Hauptwelle (7) über das teilweise Öffnen des Reibungsorgans (28),
- Einrücken des Endgangs und
- Schließen der Kupplung (3).

16. Gebrauch des Schaltgetriebes (4) nach einem der Ansprüche 1 bis 9, bei dem man die Hauptwelle (7) verlangsamt, bevor man den Rückwärtsgang durch Aktion des Reibungsorgans (28) vor dem Einrücken einrückt.
